# EUROPÄISCHE PATENTSCHRIFT

(11) **EP 3 652 402 B1**
(45) Veröffentlichungstag und Bekanntmachung des Hinweises auf die Patenterteilung: **07.02.2024**
(21) Anmeldenummer: 18737142.2
(22) Anmeldetag: 22.06.2018
(51) Int. Cl.: E05F 5/10, A47B 88/473, F16F 9/512, F16F 9/516, F16F 9/34

(54) **MÖBELDÄMPFER**
FURNITURE DAMPER
AMORTISSEUR POUR UN MEUBLE

(30) Priorität: 13.07.2017 AT 505852017
(43) Veröffentlichungstag der Anmeldung: 20.05.2020
(73) Patentinhaber: Julius Blum GmbH, 6973 Höchst (AT)
(72) Erfinder: GÖTZ, Christof, 6890 Lustenau (AT)
(74) Vertreter: Torggler & Hofmann Patentanwälte - Innsbruck
(86) Internationale Anmeldenummer: PCT/AT2018/060127
(87) Internationale Veröffentlichungsnummer: WO 2019/010506

(56) Entgegenhaltungen:
- WO-A1-2017/029102
- WO-A1-2019/039370
- AT-U1- 12 633
- DE-B- 1 037 209
- DE-U1- 20 107 426
- FR-A- 1 506 717
- FR-A1- 2 594 473
- JP-U- S4 838 428
- US-A1- 2004 021 406

## Beschreibung

Die vorliegende Erfindung bezieht sich auf einen Möbelbeschlag mit wenigstens einem Möbeldämpfer zur Dämpfung einer Bewegung eines bewegbar gelagerten Möbelteiles, umfassend:
- ein Gehäuse,
- zumindest eine im Gehäuse ausgebildete Fluidkammer mit einer Hockdruckseite und mit einer Niederdruckseite,
- ein in der Fluidkammer angeordnetes Dämpfungsfluid,
- zumindest einen Kolben mit wenigstens einer Überlastöffnung, wobei der Kolben in der Fluidkammer zur Ausführung eines Dämpfungshubes verschiebbar angeordnet ist und dass die Hochdruckseite und die Niederdruckseite der Fluidkammer durch den Kolben voneinander getrennt sind,
- eine im Kolben angeordnete Überlastsicherung mit einem von einem Kraftspeicher beaufschlagten Verschlusselement, wobei das Verschlusselement unterhalb eines vorgegebenen Schwellwertes einer Druckbeaufschlagung auf den Kolben die wenigstens eine Überlastöffnung des Kolbens verschließt und oberhalb des vorgegebenen Schwellwertes der Druckbeaufschlagung auf den Kolben die wenigstens eine Überlastöffnung des Kolbens entgegen der Kraft des Kraftspeichers freigibt, wobei durch die Freigabe der Überlastöffnung eine fluidleitende Verbindung zwischen der Hochdruckseite und der Niederdruckseite der Fluidkammer freigegeben wird,

In der JP S4838428 U (12. Mai 1973) ist gattungsfremder Stand der Technik in Form eines Stoßdämpfers für Fahrzeuge gezeigt, wobei der Stoßdämpfer eine Überlastsicherung mit einem von einer Feder beaufschlagten Ventilkörper aufweist. Der Ventilkörper ist mit einer Durchlassöffnung versehen, sodass das Dämpfungsfluid von der Hochdruckseite zur Niederdruckseite strömen kann.

In der WO 2017/029102 A1 und in der JP S5632137U (28. März 1981) sind Dämpfvorrichtungen mit einem an der Kolbenstange angeordneten Stabilisierungselement gezeigt, durch welches ein seitliches Ausknicken der Kolbenstange verhindert wird.

Allgemeine Möbeldämpfer zur Dämpfung von bewegbar gelagerten Möbelteilen sind in der WO 03/081077 A1, in der WO 2006/029421 A1, in der DE 201 07 426 U1, in der AT 12 633 U1 und in der DE 20 2008 002 407 U1 gezeigt. Das Dokument FR 2 594 473 A1 offenbart einen Möbelbeschlag mit wenigstens einem Möbeldämpfer gemäß dem Oberbegriff des Anspruchs 1.

Möbelbeschläge mit einem Möbeldämpfer werden beispielsweise zur Dämpfung einer Schließbewegung von bewegbaren Möbelteilen (Schubladen, Türen oder Klappen) oder von bewegbar gelagerten Möbelbeschlagteilen eingesetzt, sodass ein lautstarkes Zuschlagen und Beschädigungen der Möbelteile verhindert sind. Die Dämpfwirkung der Möbeldämpfer wird durch den Strömungswiderstand eines in einem Gehäuse befindlichen Dämpfungsfluides generiert. Bei einer Druckbeaufschlagung wird der Kolben innerhalb der Fluidkammer verschoben, wobei das Dämpfungsfluid durch Kolbenöffnungen hindurch und/oder durch einen zwischen dem Kolben und der Innenwandung der Fluidkammer gebildeten Spalt von der Hochdruckseite zur Niederdruckseite strömt. Bei einer zu hohen Druckbeaufschlagung des Kolbens, beispielsweise bei einer missbräuchlichen Verwendung, kann es zu einem so genannten Dämpferprellen kommen. In einem solchen Überlastfall kann das Dämpfungsfluid nicht mehr in einem ausreichenden Maße durch den Kolben hindurch oder am Kolben vorbei strömen. Der erhöhte Druck kann dann nicht mehr durch den Dämpfer abgebaut werden, sodass der Kolben bzw. die daran befestigte Kolbenstange abrupt stehen bleibt oder zurückfedert.

Überlastsicherungen für Möbeldämpfer sind vielfach bekannt, beispielsweise aus der AT 12 633 U1 der Anmelderin. Diese Überlastsicherungen weisen üblicherweise eine von einer Feder beaufschlagte Kugel auf, welche in einem Normalbetrieb (d.h. unterhalb einer vorgegebenen Druckbeaufschlagung auf den Kolben) eine Überlastöffnung des Kolbens verschließt und welche die Überlastöffnung des Kolbens in einem Überlastfall (d.h. oberhalb der vorgegebenen Druckbeaufschlagung auf den Kolben) entgegen der Kraft des Kraftspeichers freigibt, wodurch eine fluidleitende Verbindung zwischen der Hochdruckseite und der Niederdruckseite freigegeben wird. Durch die Freigabe dieser fluidleitenden Verbindung kann eine größere Menge von Dämpfungsfluid von der Hochdruckseite zu Niederdruckseite transportiert werden, sodass der Druck im Möbeldämpfer rasch abgebaut und ein Aufplatzen des Gehäuses des Möbeldämpfers verhindert wird.

Durch an der Innenwandung des Zylinders angeordnete Strömungskanäle kann eine wegabhängige Steuerung der Dämpfkraft herbeigeführt werden. Dabei können die Strömungskanäle so ausgebildet sein, dass sich der wirksame Strömungsquerschnitt entlang des Dämpfungshubes verkleinert (DE 20 2008 002 407 U1, Fig. 7). Auf diese Weise sind der Strömungswiderstand des Dämpfungsfluides und damit die Dämpfkraft umso höher, je weiter der Kolben in den Zylinder eingeschoben ist. Nachteilig daran ist, dass die Herstellung von solchen Strömungskanälen relativ aufwändig ist und dass sich der Bauraum des Möbeldämpfers entsprechend vergrößert.

Aufgabe der vorliegenden Erfindung ist es, einen Möbelbeschlag der eingangs erwähnten Gattung unter Vermeidung der oben diskutierten Nachteile anzugeben, wobei neben einer kompakten Bauweise auch ein belastungssicherer Betrieb des Möbeldämpfers ermöglicht wird.

Dies wird erfindungsgemäß durch die Merkmale des Patentanspruchs 1 gelöst. Weitere Ausführungsbeispiele der Erfindung sind in den abhängigen Ansprüchen angegeben.

Gemäß der Erfindung ist also vorgesehen, dass das Verschlusselement mindestens eine Drosselöffnung zum Durchtritt des Dämpfungsfluides von der Hochdruckseite zur Niederdruckseite zumindest bei der Ausführung des Dämpfungshubes aufweist.

Mit anderen Worten weist das Verschlusselement zum Verschließen der im Kolben angeordneten Überlastöffnung mindestens eine Drosselöffnung auf, durch welche das Dämpfungsfluid auch bei einem im Normalbetrieb ausgeführten Dämpfungshub (d.h. unterhalb des vorgegebenen Schwellwertes einer Druckbeaufschlagung auf den Kolben) strömen kann. Durch die Anordnung einer solchen Drosselöffnung kann zumindest ein Teil der Bremskraft generiert werden, ohne dass dabei die zwingende Notwendigkeit besteht, zusätzliche Strömungskanäle im Kolben und/oder an der Innenwandung der Fluidkammer anzuordnen. Selbstverständlich können diese Strömungskanäle aber auch zusätzlich zur Drosselöffnung des Verschlusselementes vorgesehen werden.

Gemäß der Erfindung wird auch vorgesehen, dass die Drosselöffnung in jeder Betriebsstellung des Möbeldämpfers geöffnet ist. Dadurch kann das Dämpfungsfluid sowohl bei der Ausführung des Dämpfungshubes als auch bei der Ausführung des Rückstellhubes durch die Drosselöffnung des Verschlusselementes hindurch strömen. Das Dämpfungsfluid kann gasförmig oder hydraulisch ausgebildet sein.

Gemäß einem Ausführungsbeispiel kann vorgesehen sein, dass das Verschlusselement eine zylindrische und/oder eine kegelige Mantelfläche aufweist und dass das Dämpfungsfluid oberhalb des vorgegebenen Schwellwertes der Druckbeaufschlagung auf den Kolben stromabwärts der Überlastöffnung durch die fluidleitende Verbindung in einer axialen Richtung entlang der zylindrischen und/oder kegeligen Mantelfläche des Verschlusselementes vorbeigeleitet oder in einer radialen Richtung von der zylindrischen und/oder kegeligen Mantelfläche des Verschlusselementes weg geleitet wird.

Durch die zylindrische und/oder kegelige Mantelfläche des Verschlusselementes wird das Dämpfungsfluid im Überlastfall derart abgelenkt, dass ein Staudruck in einem hinter (d.h. stromabwärts) dem Verschlusselement gelegenen Bereich verhindert oder zumindest derart reduziert wird, dass der Staudruck hinter dem Verschlusselement geringer als der vor dem Verschlusselement auftretende Fluiddruck ist. Durch diese Maßnahme wird erreicht, dass das Verschlusselement ein definiertes Schaltverhalten aufweist, sodass ein Oszillieren des Verschlusselementes in einer Längsrichtung des Kolbens sowie eine damit verbundenes Prellen einer Kolbenstange im Überlastfall verhindert ist.

Gemäß einem Ausführungsbeispiel kann vorgesehen sein, dass das Verschlusselement relativ zum Kolben in einer Längsrichtung des Kolbens begrenzt bewegbar gelagert ist.

Das Verschlusselement kann beispielsweise als Vollkörper ausgeführt sein. Gemäß einer alternativen Ausführungsform kann das Verschlusselement auch als Hohlkörper, beispielsweise als Hülse, ausgebildet sein. Der Hohlraum des Verschlusselementes kann nämlich zur zumindest teilweisen Aufnahme des Kraftspeichers ausgebildet sein, wodurch sich eine sehr kompakte Bauform ergibt.

Weitere Einzelheiten und Vorteile der vorliegenden Erfindung ergeben sich anhand der nachfolgenden Figurenbeschreibung. Dabei zeigt bzw. zeigen:
- Fig. 1: eine perspektivische Darstellung eines Möbels mit einem Möbelkorpus und relativ dazu verfahrbar gelagerten Schubladen,
- Fig. 2: eine Schubladenausziehführung mit einer Ladenschiene, welche mit einer Schubladenseitenwand zu verbinden ist,
- Fig. 3a-3c: einen Möbeldämpfer in einer Explosionsdarstellung sowie zwei vergrößerte Detaildarstellungen hierzu,
- Fig. 4a, 4b: der Möbeldämpfer in einem perspektivischen Querschnitt sowie eine vergrößerte Detaildarstellung hierzu,
- Fig. 5a-5c: den Möbeldämpfer in einem perspektivischen Schnitt sowie eine erste Detaildarstellung in einem Normalbetrieb und eine zweite Detaildarstellung in einem Überlastfall,
- Fig. 6a-6e: den Kolben mit der Kolbenstange in einer perspektivischen Ansicht und eine vergrößerte Detaildarstellung hierzu sowie drei verschiedene Ausführungsbeispiele des Verschlusselementes in schematischen Ansichten.

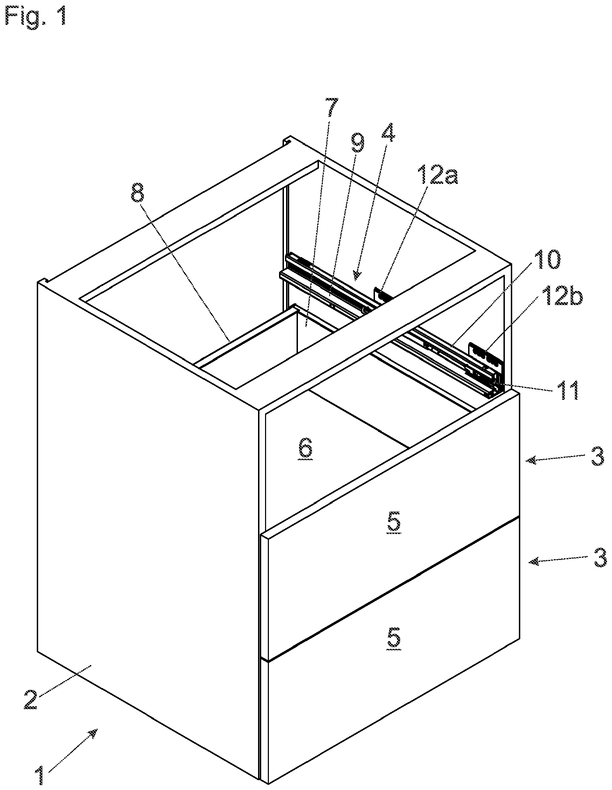

Fig. 1 zeigt ein Möbel 1 mit einem schrankförmigen Möbelkorpus 2, wobei bewegbare Möbelteile 3 in Form von Schubladen über Schubladenausziehführungen 4 relativ zum Möbelkorpus 2 verfahrbar gelagert sind. Die Schubladen weisen jeweils eine Frontblende 5, einen Schubladenboden 6, Schubladenseitenwände 7 und eine Rückwand 8 auf. Die Schubladenausziehführungen 4 umfassen jeweils eine Korpusschiene 9, welche über Befestigungsabschnitte 12a, 12b am Möbelkorpus 2 zu befestigen ist, eine relativ zur Korpusschiene 9 verschiebbar gelagerte Ladenschiene 10, welche mit der Schubladenseitenwand 7 verbunden oder zu verbinden ist, sowie optional eine Mittelschiene 11, welche zur Realisierung eines Vollauszuges der Schublade zwischen der Korpusschiene 9 und der Ladenschiene 10 verfahrbar gelagert ist.

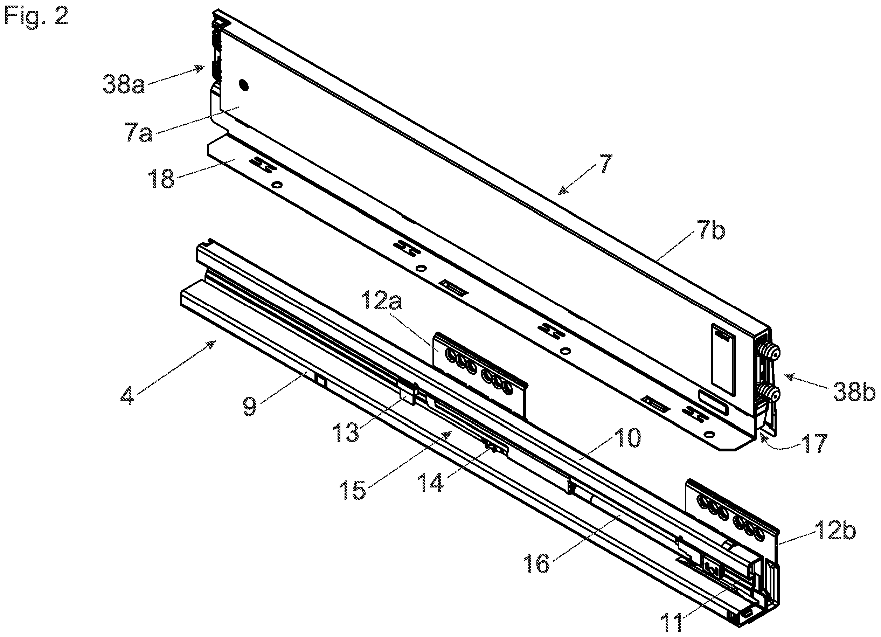

Fig. 2 zeigt eine Schubladenausziehführung 4 und eine mit der Ladenschiene 10 zu verbindende Schubladenseitenwand 7 in einer perspektivischen Ansicht. Zwischen der Ladenschiene 10 und der Korpusschiene 9 ist eine verfahrbare Mittelschiene 11 angeordnet, wobei an der Ladenschiene 10 ein Koppelelement 13 angeordnet ist, welches mit einem federbeaufschlagten Mitnehmer 14 einer Einzugsvorrichtung 15 lösbar koppelbar ist, sodass die Ladenschiene 10 gegen Ende der Schließbewegung vom Mitnehmer 14 erfasst und durch einen Kraftspeicher der Einzugsvorrichtung 15 in eine geschlossene Endlage einziehbar ist. Durch einen noch zu beschreibenden Möbeldämpfer 16 mit einer, vorzugsweise hydraulischen, Kolben-Zylinder-Einheit ist diese federunterstützte Einzugsbewegung der Ladenschiene 10 bis hin zur geschlossenen Endlage abbremsbar.

Die Schubladenseitenwand 7 ist als Hohlkammerprofil mit einer inneren Profilwand 7a und einer äußeren Profilwand 7b ausgebildet, wobei die Schubladenseitenwand 7 einen nach unten hin offenen und sich in Längsrichtung der Schubladenseitenwand 7 erstreckenden Kanal 17 zur Aufnahme der Ladenschiene 10 aufweist. Die Schubladenseitenwand 7 weist ferner eine erste Befestigungsvorrichtung 38a zum Verbinden mit der Rückwand 8, eine zweite Befestigungsvorrichtung 38b zum Verbinden mit der Frontblende 5 sowie eine Auflage 18 zur Abstützung des Schubladenbodens 6 auf.

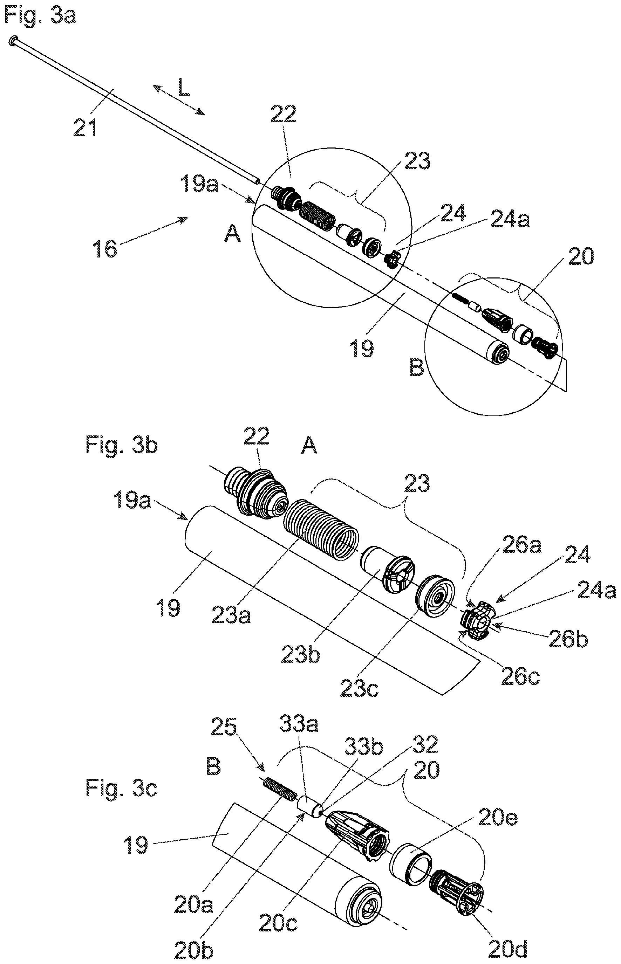

Fig. 3a zeigt den Möbeldämpfer 16 in einer Explosionsdarstellung. Der Möbeldämpfer 16 weist ein, beispielsweise zylindrisches, Gehäuse 19 auf, in welchem eine Fluidkammer 19a zur verschiebbaren Lagerung eines Kolbens 20 ausgebildet ist. Der Kolben 20 ist mit einer aus dem Gehäuse 19 herausgeführten Kolbenstange 21 verbunden, wobei der Kolben 20 innerhalb der Fluidkammer 19a in einer Längsrichtung (L) der Kolbenstange 21 zwischen einer ersten Endstellung und einer zweiten Endstellung verschiebbar gelagert ist. Bei der Ausführung eines Dämpfungshubes ist der Kolben 20 gegen den Widerstand eines im Gehäuse 19 befindlichen, vorzugsweise hydraulischen, Dämpfungsfluides abbremsbar. Der Kolben 20 kann einteilig oder auch mehrteilig ausgeführt sein. Durch eine Bewegung der Kolbenstange 21 zwischen der ersten Endstellung und der zweiten Endstellung ist ein Volumen der Fluidkammer 19a veränderbar, wobei zur Kompensation des Volumens der Fluidkammer 19a eine verformbare oder bewegbare Kompensationsvorrichtung 23 vorgesehen ist. In der Fluidkammer 19a ist in einem zwischen der ersten Endstellung und der zweiten Endstellung angeordneten Bereich zumindest ein Stabilisierungselement 24 mit einer Öffnung 24a zur verschiebbaren Aufnahme der Kolbenstange 21 angeordnet, sodass die Kolbenstange 21 bei der Ausführung des Dämpfungshubes in einer quer zur Längsrichtung (L) der Kolbenstange 21 verlaufenden Richtung stabilisierbar ist. Auf diese Weise ist die Kolbenstange 21 in Längsrichtung (L) präzise geführt, wobei eine Verbiegung oder Ausknickung der Kolbenstange 21 bei einer Bewegung in Längsrichtung (L) verhindert wird. Zum fluiddichten Verschließen der Fluidkammer 19a ist ein Verschlussteil 22 vorgesehen.

Fig. 3b zeigt den in Fig. 3a eingekreisten Bereich (A) in einer vergrößerten Ansicht. Die Kompensationsvorrichtung 23 kann entweder ein kompressibel ausgebildetes Materialstück (beispielsweise Moosgummi) oder alternativ - wie in der Figur gezeigt - eine von einer Druckfeder 23a beaufschlagbare Dichtung 23c umfassen, welche innerhalb der Fluidkammer 19a entlang der Kolbenstange 21 verschiebbar gelagert ist. Die Dichtung 23c ist gegenüber der Druckfeder 23a an einem Lagerteil 23b abstützbar. Die Größe der Öffnung 24a des, vorzugsweise scheibenförmigen, Stabilisierungselementes 24 entspricht im Wesentlichen einem Durchmesser der Kolbenstange 21. Das Stabilisierungselement 24 liegt zumindest bereichsweise an einer Innenwandung der Fluidkammer 19a an und weist zumindest eine, vorzugsweise umfangseitige, Ausnehmung 26a zum Durchtritt des in der Fluidkammer 19a angeordneten Dämpfungsfluides auf. Im gezeigten Ausführungsbeispiel ist das Stabilisierungselement 24 mit zwei oder mehreren Ausnehmungen 26a, 26b, 26c zum Durchtritt des Dämpfungsfluides versehen. Das Stabilisierungselement 24 kann innerhalb der Fluidkammer 19a in einem zwischen den beiden Endstellungen des Kolbens 20 beabstandeten Bereich entweder feststehend oder auch in Längsrichtung (L) begrenzt bewegbar gelagert sein.

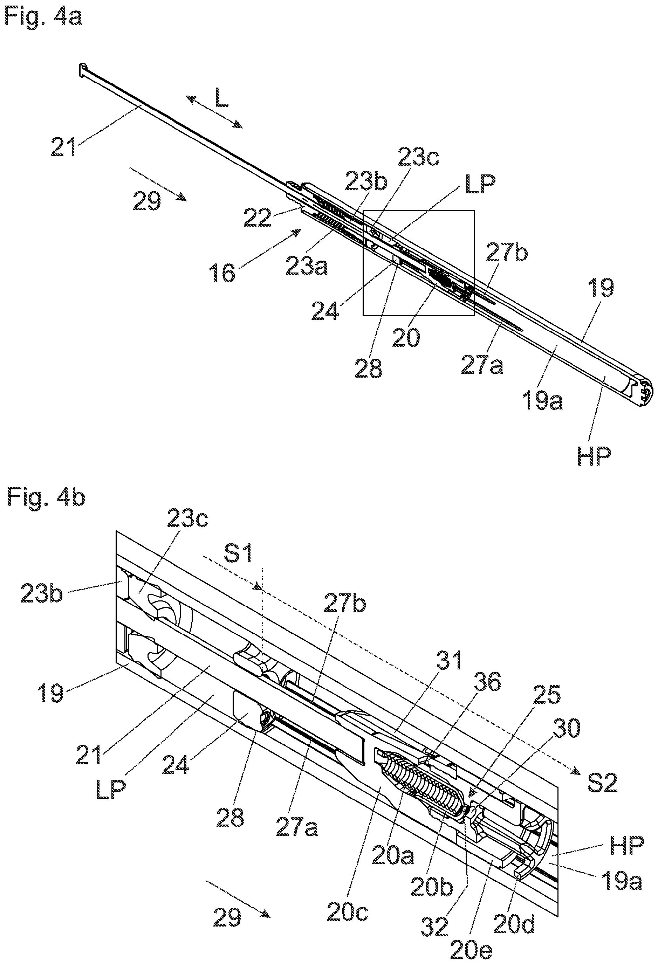

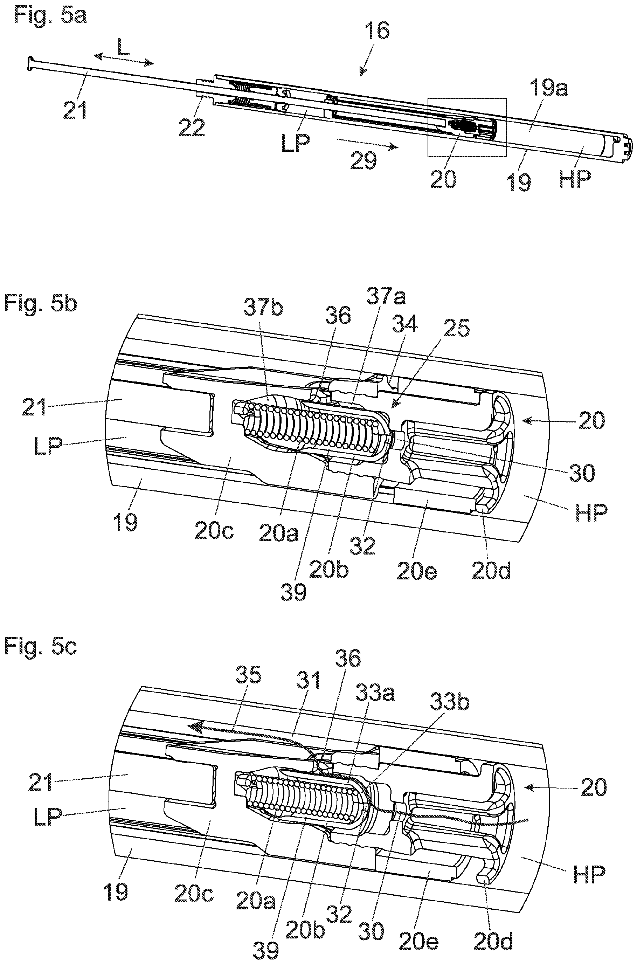

Fig. 3c zeigt den in Fig. 3a eingekreisten Bereich (B) in einer vergrößerten Ansicht. Der Kolben 20 weist zwei miteinander verbundene Kolbenteile 20c, 20d sowie eine Überlastsicherung 25 mit einem Verschlusselement 20b auf, wobei das Verschlusselement 20b durch einen Kraftspeicher 20a in Form einer Druckfeder beaufschlagt ist. Das Verschlusselement 20b kann eine zylindrische Mantelfläche 33a und/oder eine kegelige Mantelfläche 33b aufweisen. Durch wenigstens eine Drosselöffnung 32 des Verschlusselementes 20b kann das Dämpfungsfluid durch das Verschlusselement 20b hindurch strömen. Der Kolben 20 ist mit zumindest einer Überlastöffnung 30 (Fig. 4b) versehen, welche unterhalb einer vorgegebenen Druckbeaufschlagung auf den Kolben 20 durch das Verschlusselement 20b verschlossen ist. Oberhalb der vorgegebenen Druckbeaufschlagung auf den Kolben 20 wird das Verschlusselement 20b entgegen der Kraft des Kraftspeichers 20a bewegt, sodass die Überlastöffnung 30 des Kolbens 20 für den Durchtritt des Dämpfungsfluides im Überlastfall freigegeben wird. Auf diese Weise wird ein rascher Druckabbau in der Fluidkammer 19a herbeigeführt, ohne dass dabei das Gehäuse 19, der Kolben 20 oder ein anderer Bauteil des Möbeldämpfers 16 beschädigt wird. Durch einen relativ zu den Kolbenteilen 20c, 20d bewegbaren Schaltring 20e wird bei der Ausführung des Dämpfungshubes zumindest eine Kolbenöffnung 34 (Fig. 5b) verschlossen, sodass der Kolben 20 bei einer Bewegung in Richtung 29 (Fig. 4a) des Dämpfungshubes dem Dämpfungsfluid einen hohen Widerstand entgegensetzt. Bei einer Bewegung entgegen der Richtung 29 des Dämpfungshubes wird der Schaltring 20e hingegen in eine Stellung bewegt, in welcher die Kolbenöffnung 34 freigegeben wird, sodass der Kolben 20 dem Dämpfungsfluid lediglich einen geringen Widerstand entgegensetzt und die Kolbenstange 21 in einer raschen Weise wieder aus dem Gehäuse 19 herausgezogen werden kann.

Fig. 4a zeigt den Möbeldämpfer 16 in einem perspektivischen Querschnitt. Im Gehäuse 19 ist eine Fluidkammer 19a zur verschiebbaren Lagerung des Kolbens 20 ausgebildet. Durch an der Innenwandung des Gehäuses 19 angeordnete Strömungskanäle 27a, 27b, vorzugsweise in Form von Nuten, kann eine wegabhängige Steuerung der Dämpfkraft herbeigeführt werden. Dabei können die Strömungskanäle 27a, 27b so ausgebildet sein, dass sich der wirksame Strömungsquerschnitt in Richtung 29 des Dämpfungshubes verkleinert. Auf diese Weise sind der Strömungswiderstand des Dämpfungsfluides und damit die Dämpfkraft umso höher, je weiter der Kolben 20 in das Gehäuse 19 eingeschoben ist. Die Kolbenstange 21 ist durch den Verschlussteil 22, durch die Druckfeder 23a, den Lagerteil 23b und die Dichtung 23c der Kompensationsvorrichtung 23 sowie durch das Stabilisierungselement 24 hindurchgeführt und mit dem Kolben 20 verbunden.

Fig. 4b zeigt den in Fig. 4a eingerahmten Bereich in einer vergrößerten Ansicht. Bei einer Bewegung des Kolbens 20 in Richtung 29 des Dämpfungshubes wird die Kolbenstange 21 in die Fluidkammer 19a eingeschoben, wobei das zusätzliche Volumen der Kolbenstange 21 durch die Kompensationsvorrichtung 23 kompensierbar ist. Dies wird dadurch erreicht, indem sich die Dichtung 23c bei Einschieben der Kolbenstange 21 in die Fluidkammer 19a entgegen der Kraft der Druckfeder 23a bewegt, wodurch sich das Volumen der Fluidkammer 19a vergrößert und dadurch das zusätzliche Volumen der Kolbenstange 21 ausgeglichen wird. Das Stabilisierungselement 24 ist im gezeigten Ausführungsbeispiel innerhalb der Fluidkammer 19a nur über einen ersten Teilweg S1 begrenzt bewegbar, wobei das Gehäuse 19 zur Begrenzung einer Bewegung des Stabilisierungselementes 24 eine Anschlagfläche 28 aufweist. Im gezeigten Ausführungsbeispiel wird die Anschlagfläche 28 durch eine Verjüngung der Fluidkammer 19a gebildet, wobei die Verjüngung eine ringförmige Schrägfläche ausbildet. Auf diese Weise ist das Stabilisierungselement 24 nur entlang des ersten Teilweges S1 verschiebbar gelagert. Entlang eines zweiten Teilweges S2 sind die Strömungskanäle 27a, 27b angeordnet, wobei durch die Anschlagfläche 28 ein Eintritt und damit eine mögliche Verklemmung der Dichtung 23c mit den Strömungskanälen 27a, 27b verhindert wird.

Die Fluidkammer 19a weist eine Hochdruckseite (HP) und eine Niederdruckseite (LP) auf, welche durch den Kolben 20 voneinander getrennt sind. Bei der Ausführung des Dämpfungshubes in Richtung 29 wird der Kolben 20 in die Hockdruckseite (HP) der Fluidkammer 19a eingedrückt. Falls die Druckbeaufschlagung des Kolbens 20 einen vorgegebenen Schwellwert überschreitet, so wird die Überlastsicherung 25 wirksam. Hierfür weist der Kolben 20 zumindest eine Überlastöffnung 30 auf, welche im Normalbetrieb (d.h. unterhalb der vorgegebenen Druckbeaufschlagung auf den Kolben 20) durch das Verschlusselement 20b verschlossen ist. Bei Überschreitung der vorgegebenen Druckbeaufschlagung auf den Kolben 20 wird das Verschlusselement 20b entgegen der Kraft des Kraftspeichers 20a bewegt, sodass die Überlastöffnung 30 des Kolbens 20 freigegeben wird. Durch die Freigabe der Überlastöffnung 30 wird eine fluidleitende Verbindung 31 zwischen der Hochdruckseite (HP) und der Niederdruckseite (LP) freigegeben, sodass der wirksame Strömungsquerschnitt für das Dämpfungsfluid erhöht wird und das Dämpfungsfluid ausgehend von der Hochdruckseite (HP) durch die Überlastöffnung 30 und durch einen Abführkanal 36 der der fluidleitenden Verbindung 31 zur Niederdruckseite (LP) strömt. Auf diese Weise wird ein rascher Druckabbau in der Fluidkammer 19a herbeigeführt.

Fig. 5a zeigt den Möbeldämpfer 16 in einem perspektivischen Schnitt. Die Hochdruckseite (HP) und die Niederdruckseite (LP) der Fluidkammer 19a sind durch den Kolben 20 voneinander getrennt, wobei der Kolben 20 bei der Ausführung des Dämpfungshubes in Richtung 29 in das Gehäuse 19 eindrückbar ist.

Fig. 5b zeigt den in Fig. 5a eingerahmten Bereich in einer vergrößerten Ansicht, wobei der Kolben 20 bei der Ausführung des Dämpfungshubes unterhalb eines vorgegebenen Schwellwertes einer Druckbeaufschlagung in Richtung 29 bewegt wird (Normalbetrieb). In diesem Fall wird die Überlastöffnung 30 des Kolbens 20 durch das Verschlusselement 20b durch die Kraft des Kraftspeichers 20a verschlossen. Das Dämpfungsfluid strömt ausgehend von der Hockdruckseite (HP) durch den Kolbenteil 20d hindurch und gelangt durch zumindest eine Kolbenöffnung 34 zur Niederdruckseite (LP), sodass die Bewegung des Kolbens 20 abgebremst wird. Der Kolben 20 weist im gezeigten Ausführungsbeispiel einen ersten Kolbenteil 20d und wenigstens einen mit dem ersten Kolbenteil 20d verbundenen zweiten Kolbenteil 20c auf. Der erste Kolbenteil 20d weist eine erste Ausnehmung 37a auf, in welcher das Verschlusselement 20b zumindest teilweise aufgenommen ist. Der zweite Kolbenteil 20c weist eine zweite Ausnehmung 37b auf, in welcher der Kraftspeicher 20a zumindest teilweise aufgenommen ist. Dabei kann vorgesehen sein, dass eine Längsrichtung der ersten Ausnehmung 37a des ersten Kolbenteiles 20d und eine Längsrichtung der zweiten Ausnehmung 37b des zweiten Kolbenteiles 20c koaxial zueinander verlaufen. Der zweite Kolbenteil 20c ist mit der Kolbenstange 21 verbunden, welche aus dem Gehäuse 19 des Möbeldämpfers 16 herausgeführt ist. Das Verschlusselement 20b kann als Hohlkörper, beispielsweise als Hülse, ausgebildet sein, wobei der als Druckfeder ausgebildete Kraftspeicher 20a zumindest teilweise in einem Hohlraum 39 des Verschlusselementes 20b aufgenommen ist.

Fig. 5c zeigt hingegen den in Fig. 5a eingerahmten Bereich in einer vergrößerten Ansicht, wobei der Kolben 20 bei der Ausführung des Dämpfungshubes oberhalb eines vorgegebenen Schwellwertes einer Druckbeaufschlagung in Richtung 29 bewegt wird. In diesem Überlastfall wird das Verschlusselement 20b durch den auftretenden Fluiddruck entgegen der Kraft des Kraftspeichers 20a gedrückt, sodass die Überlastöffnung 30 des Kolbens 20 freigegeben wird. Das auf der Hochdruckseite (HP) befindliche Dämpfungsfluid strömt im Überlastfall also durch die Überlastöffnung 30 des Kolbens 20 hindurch, wobei das Dämpfungsfluid durch die fluidleitende Verbindung 31 in Richtung des eingezeichneten Pfeils 35 stromabwärts der Überlastöffnung 30 entlang der zylindrischen und/oder kegeligen Mantelfläche 33a, 33b des Verschlusselementes 20b in einer axialen Richtung vorbeigeleitet oder in einer radialen Richtung von der zylindrischen und/oder kegeligen Mantelfläche 33a, 33b des Verschlusselementes 20b weg geleitet wird. Die fluidleitende Verbindung 31 kann beispielsweise zumindest eine im Kolben 20 angeordnete Bohrung oder zumindest einen Abführkanal 36 mit einer Längsrichtung aufweisen, wobei die Längsrichtung des Abführkanals 36 parallel oder quer, beispielsweise rechtwinklig, zu einer Längsrichtung (L) des Kolbens 20 verläuft. Durch die zylindrische und/oder kegelige Mantelfläche 33a, 33b des Verschlusselementes 20b kann das Dämpfungsfluid im Überlastfall stromabwärts der Überlastöffnung 30 derart abgelenkt werden, dass ein hinter dem Verschlusselement 20b auftretender Staudruck und ein unerwünschtes Oszillieren des Verschlusselementes 20b in Längsrichtung (L) vermieden sind. Vorzugsweise ist vorgesehen, dass die Länge des Verschlusselementes 20b mindestens dem zweifachen Durchmesser des Verschlusselementes 20b entspricht.

Das Verschlusselement 20b weist zumindest eine, vorzugsweise koaxial zur Überlastöffnung 30 angeordnete Drosselöffnung 32 zum Durchtritt des Dämpfungsfluides auf. Diese Drosselöffnung 32 dient zur Stabilisierung des Kolbens 20, insbesondere kurz vor Erreichen der eingedrückten Endstellung. Die Dämpfungswirkung des Kolbens 20 kann, wie in der Fig. 4a gezeigt und beschrieben, nämlich mehrstufig ausgebildet sein. Durch den ersten Strömungskanal 27b ist eine Bewegung des Kolbens 20 über eine erste Teilstrecke, durch den zweiten Strömungskanal 27a über eine zweite Teilstrecke und durch die Drosselöffnung 32 über eine dritte Teilstrecke bis hin zur eingedrückten Endstellung dämpfbar. Das Dämpfungsfluid strömt dabei über die Drosselöffnung 32 in die Ausnehmungen 37a, 37b des Kolbens 20 hinein und gelangt dann ausgehend von der Ausnehmung 37b des zweiten Kolbenteiles 20c zur Niederdruckseite (LP) der Fluidkammer 19a.

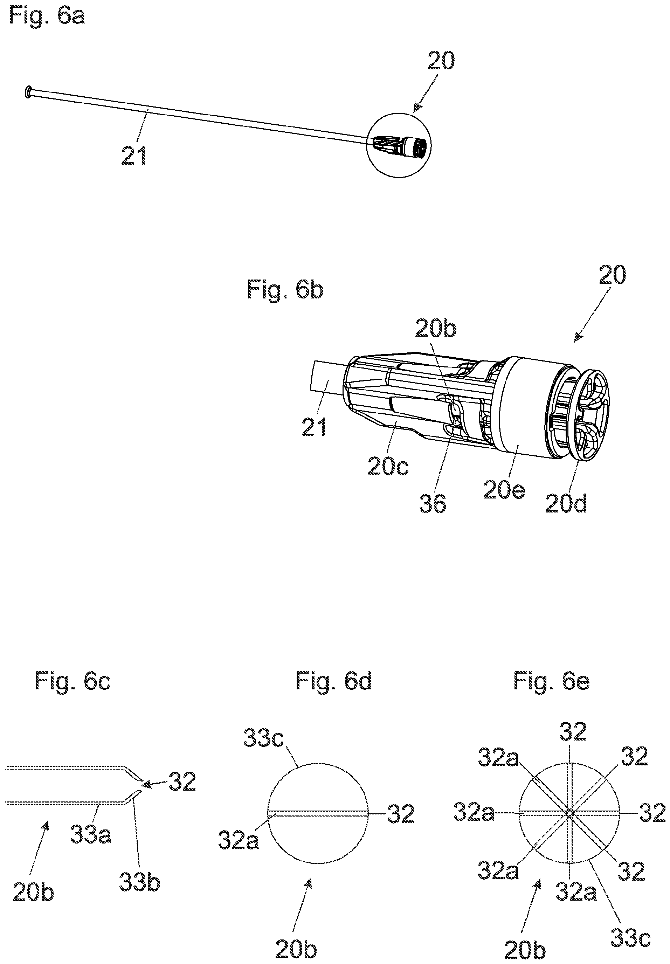

Fig. 6a zeigt den Kolben 20 mit der damit verbundenen Kolbenstange 21 in einer ersten perspektivischen Ansicht. Fig. 6b zeigt den in Fig. 6a eingekreisten Bereich in einer vergrößerten Ansicht. Erkennbar ist der erste Kolbenteil 20d und der zweite Kolbenteil 20c, zwischen denen der Schaltring 20e und das Verschlusselement 20b begrenzt verschiebbar gelagert sind. Der zweite Kolbenteil 20c ist mit zumindest einem Abführkanal 36 versehen, durch welchen das Dämpfungsfluid im Überlastfall austreten kann.

Fig. 6c zeigt ein mögliches Ausführungsbeispiel des Verschlusselementes 20b, welches eine zylindrische Mantelfläche 33a und/oder eine kegelige Mantelfläche 33b aufweist. Durch die Drosselöffnung 32 kann das Dämpfungsfluid durch das Verschlusselement 20b hindurch strömen.

Fig. 6d zeigt das Verschlusselement 20b, welches eine im Wesentlichen kugelförmige Oberfläche 33c aufweist. Das Dämpfungsfluid kann durch die Drosselöffnung 32 in das Verschlusselement 20b einströmen und wird durch den Kanal 32a zur Niederdruckseite (LP) transportiert. Zur Fixierung der Lage des Verschlusselementes 20b kann eine (nicht gezeigte) Führung vorgesehen werden, sodass das Verschlusselement 20b nicht um eine eigene Achse rotiert wird.

Fig. 6e zeigt das Verschlusselement 20b mit einer kugelförmigen Oberfläche 33c, wobei zwei oder mehrere Drosselöffnungen 32 zum Durchtritt des Dämpfungsfluides und zwei oder mehrere Kanäle 32a zum Abtransport des Dämpfungsfluides vorgesehen sind. Hier ist eine Führung zur Fixierung der Lage des Verschlusselementes 20b nicht zwingend notwendig, da das Dämpfungsfluid auch bei einer Rotation des Verschlusselementes 20b um eine eigene Achse in die verschieden ausgerichteten Drosselöffnungen 32 einströmen kann.

Wenn auch der Möbeldämpfer 16 anhand der Fig. 2 in Kombination mit einem Möbelbeschlag in Form einer Schubladenausziehführung 4 gezeigt wurde, so ist es unmittelbar einsichtig, dass der Möbeldämpfer 16 auch in Kombination mit einer Halteplatte zur Lagerung des Möbeldämpfers 16, mit einem Möbelscharnier oder mit einem Möbelantrieb zum Bewegen eines bewegbar gelagerten Möbelteiles 3 eingesetzt werden kann.

## Patentansprüche

1. Möbelbeschlag mit wenigstens einem Möbeldämpfer (16) zur Dämpfung einer Bewegung eines bewegbar gelagerten Möbelteiles (3), wobei der Möbeldämpfer (16) aufweist:
- ein Gehäuse (19),
- zumindest eine im Gehäuse (19) ausgebildete Fluidkammer (19a) mit einer Hockdruckseite (HP) und mit einer Niederdruckseite (LP),
- ein in der Fluidkammer (19a) angeordnetes Dämpfungsfluid,
- zumindest einen Kolben (20) mit wenigstens einer Überlastöffnung (30), wobei der Kolben (20) in der Fluidkammer (19a) zur Ausführung eines Dämpfungshubes verschiebbar angeordnet ist und dass die Hochdruckseite (HP) und die Niederdruckseite (LP) der Fluidkammer (19a) durch den Kolben (20) voneinander getrennt sind,
- eine im Kolben (20) angeordnete Überlastsicherung (25) mit einem von einem Kraftspeicher (20a) beaufschlagten Verschlusselement (20b), wobei das Verschlusselement (20b) unterhalb eines vorgegebenen Schwellwertes einer Druckbeaufschlagung auf den Kolben (20) die wenigstens eine Überlastöffnung (30) des Kolbens (20) verschließt und oberhalb des vorgegebenen Schwellwertes der Druckbeaufschlagung auf den Kolben (20) die wenigstens eine Überlastöffnung (30) des Kolbens (20) entgegen der Kraft des Kraftspeichers (20a) freigibt, wobei durch die Freigabe der Überlastöffnung (30) eine fluidleitende Verbindung (31) zwischen der Hochdruckseite (HP) und der Niederdruckseite (LP) der Fluidkammer (19a) freigegeben wird,
wobei das Verschlusselement (20b) mindestens eine Drosselöffnung (32) zum Durchtritt des Dämpfungsfluides von der Hochdruckseite (HP) zur Niederdruckseite (LP) zumindest bei der Ausführung des Dämpfungshubes aufweist, **dadurch gekennzeichnet, dass** die Drosselöffnung (32) in jeder Betriebsstellung des Möbeldämpfers (16) geöffnet ist.

2. Möbelbeschlag nach Anspruch 1, **dadurch gekennzeichnet, dass** das Verschlusselement (20b) eine zylindrische und/oder eine kegelige Mantelfläche (33a, 33b) aufweist und dass das Dämpfungsfluid oberhalb des vorgegebenen Schwellwertes der Druckbeaufschlagung auf den Kolben (20) stromabwärts der Überlastöffnung (30) durch die fluidleitende Verbindung (31) in einer axialen Richtung entlang der zylindrischen und/oder kegeligen Mantelfläche (33a, 33b) des Verschlusselementes (20b) vorbeigeleitet oder in einer radialen Richtung von der zylindrischen und/oder kegeligen Mantelfläche (33a, 33b) des Verschlusselementes (20b) weg geleitet wird.

3. Möbelbeschlag nach Anspruch 1 oder 2, **dadurch gekennzeichnet, dass** das Verschlusselement (20b) relativ zum Kolben (20) in einer Längsrichtung (L) des Kolbens (20) begrenzt bewegbar gelagert ist.

4. Möbelbeschlag nach einem der Ansprüche 1 bis 3, **dadurch gekennzeichnet, dass** das Verschlusselement (20b) einen Hohlraum (39) aufweist, in welchem der Kraftspeicher (20a) zumindest teilweise aufgenommen ist.

5. Möbelbeschlag nach einem der Ansprüche 1 bis 4, **dadurch gekennzeichnet, dass** die Drosselöffnung koaxial zur Überlastöffnung (30) angeordnet ist.

6. Möbelbeschlag nach einem der Ansprüche 1 bis 5, **dadurch gekennzeichnet, dass** die fluidleitende Verbindung (31) zumindest eine im Kolben (20) angeordnete Bohrung oder einen Abführkanal (36) mit einer Längsrichtung aufweist, wobei die Längsrichtung des Abführkanals (36) parallel oder quer, vorzugsweise rechtwinklig, zu einer Längsrichtung (L) des Kolbens (20) verläuft.

7. Möbelbeschlag nach einem der Ansprüche 1 bis 6, **dadurch gekennzeichnet, dass** der Kolben (20) einen ersten Kolbenteil (20d) und wenigstens einen mit dem ersten Kolbenteil (20d) verbundenen zweiten Kolbenteil (20c) aufweist.

8. Möbelbeschlag nach Anspruch 7, **dadurch gekennzeichnet, dass** der erste Kolbenteil (20d) eine erste Ausnehmung (37a) aufweist, in welcher das Verschlusselement (20b) zumindest teilweise aufgenommen ist.

9. Möbelbeschlag nach Anspruch 7 oder 8, **dadurch gekennzeichnet, dass** der zweite Kolbenteil (20c) eine zweite Ausnehmung (37b) aufweist, in welcher der Kraftspeicher (20a) zumindest teilweise aufgenommen ist.

10. Möbelbeschlag nach Anspruch 9, **dadurch gekennzeichnet, dass** eine Längsrichtung der ersten Ausnehmung (37a) des ersten Kolbenteiles (20d) und eine Längsrichtung der zweiten Ausnehmung (37b) des zweiten Kolbenteiles (20c) koaxial zueinander verlaufen.

11. Möbelbeschlag nach einem der Ansprüche 7 bis 10, **dadurch gekennzeichnet, dass** der zweite Kolbenteil (20c) mit einer Kolbenstange (21) verbunden ist.

12. Möbelbeschlag nach Anspruch 11, **dadurch gekennzeichnet, dass** die Kolbenstange (21) aus dem Gehäuse (19) des Möbeldämpfers (16) herausgeführt ist.

13. Möbelbeschlag nach Anspruch 11 oder 12, **dadurch gekennzeichnet, dass** die Kolbenstange (21) zur Ausführung des Dämpfungshubes zwischen einer ersten Endstellung und einer zweiten Endstellung verschiebbar ist, wobei in der Fluidkammer (19a) in einem zwischen der ersten Endstellung und der zweiten Endstellung angeordneten Bereich zumindest ein Stabilisierungselement (24) mit einer Öffnung (24a) zur verschiebbaren Aufnahme der Kolbenstange (21) angeordnet ist, sodass die Kolbenstange (21) bei der Ausführung des Dämpfungshubes in einer quer zur Längsrichtung (L) der Kolbenstange (21) verlaufenden Richtung stabilisierbar ist.

14. Möbelbeschlag nach einem der Ansprüche 1 bis 13, **dadurch gekennzeichnet, dass** der Kraftspeicher (20a) zumindest eine Schraubenfeder, vorzugsweise eine Druckfeder, aufweist.

15. Möbelbeschlag nach einem der Ansprüche 1 bis 14, **dadurch gekennzeichnet, dass** der Möbelbeschlag als Schubladenausziehführung (4), als Halteplatte zur Lagerung des Möbeldämpfers (16), als Möbelscharnier oder als Möbelantrieb zum Bewegen eines bewegbar gelagerten Möbelteiles (3) ausgebildet ist.

## Claims

1. A furniture fitting comprising at least one furniture damper (16) for dampening a movement of a movably-supported furniture part (3), the furniture damper (16) comprising:
- a housing (19),
- at least one fluid chamber (19a) arranged in the housing (19), the fluid chamber (19a) having a high-pressure side (HP) and a low-pressure side (LP),
- a damping fluid arranged in the fluid chamber (19a),
- at least one piston (20) having at least one overload opening (30), the piston (20) being displaceably arranged in the fluid chamber (19a) for performing a damping hub, and the high-pressure side (HP) and the low-pressure side (LP) of the fluid chamber (19a) are separated from each other by the piston (20),
- an overload safety device (25) arranged in the piston (20), the overload safety device (25) having a closure element (20b) pressurized by a force storage member (20a), wherein the closure element (20b) blocks the at least one overload opening (30) of the piston (20) below a predetermined threshold value of a pressure application to the piston (20), and unblocks the at least one overload opening (30) of the piston (20) against a force of the force storage member (20a) above the predetermined threshold value of a pressure application to the piston (20), wherein due to unblocking of the overload opening (30), a fluid-conductive connection (31) between the high pressure side (HP) and the low-pressure side (LP) of the fluid chamber (19a) is unblocked,
- wherein the closure element (20b) includes at least one throttle opening (32) for the passage of the damping fluid from the high-pressure side (HP) to the low-pressure side (LP) at least when performing the damping hub, **characterized in that** the throttle opening (32) is open in each operating position of the furniture damper (16).

2. The furniture fitting according to claim 1, **characterized in that** the closure element (20b) has a cylindrical and/or a conical shell surface (33a, 33b), and the damping fluid, above the predetermined threshold value of the pressure application to the piston (20), can be passed along the cylindrical and/or conical shell surface (33a, 33b) downstream of the overload opening (30) through the fluid-conductive connection (31) along the cylindrical and/or conical shell surface (33a, 33b) in an axial direction, or can be deflected away from the cylindrical and/or conical shell surface (33a, 33b) of the closure element (20b) in a radial direction.

3. The furniture fitting according to claim 1 or 2, **characterized in that** the closure element (20b) is movably supported relative to the piston (20) in a longitudinal direction (L) of the piston (20) in a limited manner.

4. The furniture fitting according to one of the claims 1 to 3, **characterized in that** the closure element (20b) includes a cavity (39) in which the force storage member (20a) is at least partially accommodated.

5. The furniture fitting according to one of the claims 1 to 4, **characterized in that** the throttle opening (32) is arranged coaxially with the overload opening (30).

6. The furniture fitting according to one of the claims 1 to 5, **characterized in that** the fluid-conductive connection (31) includes at least one bore or a discharge channel (36) arranged in the piston (20), the discharge channel (36) having a longitudinal direction extending parallel or transverse, preferably at a right angle, to a longitudinal direction (L) of the piston (20).

7. The furniture fitting according to one of the claims 1 to 6, **characterized in that** the piston (20) includes a first piston portion (20d) and at least one second piston portion (20c) connected to the first piston portion (20d).

8. The furniture fitting according to claim 7, **characterized in that** the first piston portion (20d) includes a first recess (37a) in which the closure element (20b) is at least partially accommodated.

9. The furniture fitting according to claim 7 or 8, **characterized in that** the second piston portion (20c) includes a second recess (37b) in which the force storage member (20a) is at least partially accommodated.

10. The furniture fitting according to claim 9, **characterized in that** a longitudinal direction of the first recess (37a) of the first piston portion (20d) and a longitudinal direction of the second recess (37b) of the second piston portion (20c) extend coaxially with each other.

11. The furniture fitting according to one of the claims 7 to 10, **characterized in that** the second piston portion (20c) is connected to a piston rod (21).

12. The furniture fitting according to claim 11, **characterized in that** the piston rod (21) is led out from the housing (19) of the furniture damper (16).

13. The furniture fitting according to claim 11 or 12, **characterized in that** the piston rod (21), for performing the damping hub, is displaceable between a first end position and a second end position, wherein at least one stabilizing element (24) is arranged in the fluid chamber (19a) in a region between the first end position and the second end position, the at least one stabilizing element (24) having an opening (24a) for displaceably receiving the piston rod (21), so that the piston rod (21), upon performing the damping hub, can be stabilized in a direction extending transversely to the longitudinal direction (L) of the piston rod (21).

14. The furniture fitting according to one of the claims 1 to 13, **characterized in that** the force storage member (20a) includes at least one helical spring, preferably a compression spring.

15. The furniture fitting according to one of the claims 1 to 14, **characterized in that** the furniture fitting is configured as a drawer pull-out guide (4), as a holding plate for supporting the furniture damper (16), as furniture hinge, or as a furniture drive for moving a movably-supported furniture part (3) .

## Revendications

1. Ferrure de meuble avec au moins un amortisseur de meuble (16) destiné à amortir un déplacement d'une partie de meuble (3) montée de manière à pouvoir être déplacée, dans laquelle l'amortisseur de meuble (16) présente:
- un boîtier (19),
- au moins une chambre à fluide (19a), réalisée dans le boîtier (19), avec un côté haute pression (HP) et avec un côté basse pression (LP),
- un fluide d'amortissement disposé dans la chambre à fluide (19a),
- au moins un piston (20) avec au moins une ouverture de surcharge (30), dans laquelle le piston (20) est disposé de manière à pouvoir être coulissé dans la chambre à fluide (19a) pour exécuter une course d'amortissement, et le côté haute pression (HP) et le côté basse pression (LP) de la chambre à fluide (19a) sont séparés l'un de l'autre par le piston (20),
- une sécurité anti-surcharges (25), disposée dans le piston (20), avec un élément de fermeture (20b) soumis à l'action d'un accumulateur de force (20a), dans laquelle l'élément de fermeture (20b) ferme l'au moins une ouverture de surcharge (30) du piston (20) au-dessous d'une valeur de seuil prédéfinie d'une action exercée par une pression sur le piston (20) et dégage l'au moins une ouverture de surcharge (30) du piston (20) à l'encontre de la force de l'accumulateur de force (20a) au-dessus de la valeur de seuil prédéfinie de l'action exercée par une pression sur le piston (20), dans laquelle une liaison fluidique (31) entre le côté haute pression (HP) et le côté basse pression (LP) de la chambre à fluide (19a) est dégagée par le dégagement de l'ouverture de surcharge (30),
- dans laquelle l'élément de fermeture (20b) présente au moins une ouverture d'étranglement (32) pour le passage du fluide d'amortissement depuis le côté haute pression (HP) vers le côté basse pression (LP) au moins lors de l'exécution de la course d'amortissement,
**caractérisée en ce que** l'ouverture d'étranglement (32) est ouverte dans chaque position de fonctionnement de l'amortisseur de meuble (16).

2. Ferrure de meuble selon la revendication 1, **caractérisée en ce que** l'élément de fermeture (20b) présente une surface extérieure (33a, 33b) cylindrique et/ou conique, et que le fluide d'amortissement est acheminé dans une direction axiale le long de la surface extérieure (33a, 33b) cylindrique et/ou conique de l'élément de fermeture (20b) par la liaison fluidique (31) en aval de l'ouverture de surcharge (30) au-dessus de la valeur de seuil prédéfinie de l'action exercée par une pression sur le piston (20) ou est acheminé dans une direction radiale de manière à s'éloigner de la surface extérieure (33a, 33b) cylindrique et/ou conique de l'élément de fermeture (20b).

3. Ferrure de meuble selon la revendication 1 ou 2, **caractérisée en ce que** l'élément de fermeture (20b) est monté de manière à pouvoir être déplacé de manière limitée dans une direction longitudinale (L) du piston (20) par rapport au piston (20).

4. Ferrure de meuble selon l'une quelconque des revendications 1 à 3, **caractérisée en ce que** l'élément de fermeture (20b) présente un espace creux (39), dans lequel l'accumulateur de force (20a) est logé au moins en partie.

5. Ferrure de meuble selon l'une quelconque des revendications 1 à 4, **caractérisée en ce que** l'ouverture d'étranglement est disposée de manière coaxiale par rapport à l'ouverture de surcharge (30).

6. Ferrure de meuble selon l'une quelconque des revendications 1 à 5, **caractérisée en ce que** la liaison fluidique (31) présente au moins un alésage disposé dans le piston (20) ou un canal d'évacuation (36) avec une direction longitudinale, dans laquelle la direction longitudinale du canal d'évacuation (36) s'étend de manière parallèle ou de manière transversale, de préférence à angle droit, par rapport à une direction longitudinale (L) du piston (20).

7. Ferrure de meuble selon l'une quelconque des revendications 1 à 6, **caractérisée en ce que** le piston (20) présente une première partie de piston (20d) et au moins une deuxième partie de piston (20c) reliée à la première partie de piston (20d) .

8. Ferrure de meuble selon la revendication 7, **caractérisée en ce que** la première partie de piston (20d) présente un premier évidement (37a), dans lequel l'élément de fermeture (20b) est logé au moins en partie.

9. Ferrure de meuble selon la revendication 7 ou 8, **caractérisée en ce que** la deuxième partie de piston (20c) présente un deuxième évidement (37b), dans lequel l'accumulateur de force (20a) est logé au moins en partie.

10. Ferrure de meuble selon la revendication 9, **caractérisée en ce qu'**une direction longitudinale du premier évidement (37a) de la première partie de piston (20d) et une direction longitudinale du deuxième évidement (37b) de la deuxième partie de piston (20c) s'étendent de manière coaxiale l'une par rapport à l'autre.

11. Ferrure de meuble selon l'une quelconque des revendications 7 à 10, **caractérisée en ce que** la deuxième partie de piston (20c) est reliée à une tige de piston (21).

12. Ferrure de meuble selon la revendication 11, **caractérisée en ce que** la tige de piston (21) est sortie de manière guidée du boîtier (19) de l'amortisseur de meuble (16).

13. Ferrure de meuble selon la revendication 11 ou 12, **caractérisée en ce que** la tige de piston (21) peut être coulissée entre une première position terminale et une deuxième position terminale pour exécuter la course d'amortissement, dans laquelle au moins un élément de stabilisation (24) avec une ouverture (24a) destinée à loger de manière à pouvoir coulisser la tige de piston (21) est disposé dans une zone disposée entre la première position terminale et la deuxième position terminale dans la chambre à fluide (19a) si bien que la tige de piston (21) peut être stabilisée dans une direction s'étendant de manière transversale par rapport à la direction longitudinale (L) de la tige de piston (21) lors de l'exécution de la course d'amortissement.

14. Ferrure de meuble selon l'une quelconque des revendications 1 à 13, **caractérisée en ce que** l'accumulateur de force (20a) présente au moins un ressort hélicoïdal, de préférence un ressort de pression.

15. Ferrure de meuble selon l'une quelconque des revendications 1 à 14, **caractérisée en ce que** la ferrure de meuble est réalisée en tant que glissière d'extraction de tiroir (4), en tant que panneau de maintien pour le montage de l'amortisseur de meuble (16), en tant que charnière de meuble ou en tant qu'entraînement de meuble destiné à déplacer une partie de meuble (3) montée de manière à pouvoir être déplacée.
